Europäisches Patentamt

European Patent Office

Office européen des brevets

(11) Veröffentlichungsnummer: **0 060 926**
**B1**

(12) ## EUROPÄISCHE PATENTSCHRIFT

(45) Veröffentlichungstag der Patentschrift:
29.05.85

(51) Int. Cl.⁴: **A 22 C 13/00**

(21) Anmeldenummer: **81109118.0**

(22) Anmeldetag: **28.10.81**

(54) **Für Lebensmittel, insbesondere Wurstwaren, geeignete faserverstärkte Schlauchhülle und Verfahren zu ihrer Herstellung.**

(30) Priorität: **07.03.81 DE 3108795**

(43) Veröffentlichungstag der Anmeldung:
**29.09.82 Patentblatt 82/39**

(45) Bekanntmachung des Hinweises auf die Patenterteilung:
**29.05.85 Patentblatt 85/22**

(84) Benannte Vertragsstaaten:
**AT BE CH DE FR GB IT LI LU NL SE**

(56) Entgegenhaltungen:
**EP - A - 0 001 545**
**DE - B - 1 302 384**
**US - A - 2 138 462**

(73) Patentinhaber: **HOECHST AKTIENGESELLSCHAFT,
Postfach 80 03 20, D-6230 Frankfurt am Main 80 (DE)**

(72) Erfinder: **Porrmann, Herbert, Dr., Imkerweg 20,
D-6272 Niederhausen (DE)**
Erfinder: **Heidel, Peter, Dr., Am Hohen Stein 16,
D-6200 Wiesbaden (DE)**
Erfinder: **Stenger, Karl, Theodor-Heuss-Strasse 27,
D-6220 Rüdesheim (DE)**

**Beschreibung**

Die Erfindung bezieht sich auf eine Schlauchhülle von der im Oberbegriff des Anspruchs 1 genannten Art und auf ein Verfahren zu ihrer Herstellung von der im Oberbegriff des Anspruchs 10 angegebenen Gattung.

Schläuche dieser Art aus faserverstärkter regenerierter Cellulose werden üblicherweise (US-A-2 144 900, US-A-3 224 885, US-A-3 645 760 und US-A-4 195 054) nach folgenden wesentlichen Verfahrensschritten hergestellt. Eine Faservliesbahn wird zu einem Schlauch geformt, wobei ihre Ränder sich überlappen und mit Viskose verklebt werden. Nach ein- oder beidseitiger Beschichtung der gesamten Schlauchoberfläche mit Viskose, z. B. aus Ringschlitzdüsen, wird die Viskose koaguliert, zu Cellulosehydrat-Gel regeneriert und getrocknet. Während dieses Prozesses wird der Schlauch durch das bei der Koagulation und Regenerierung entstehende Gasgemisch und während des Trocknens durch ein eingebrachtes eingeschlossenes Luftvolumen abgestützt und gegebenenfalls zur Verbesserung der mechanischen Eigenschaften in Längs- und Querrichtung gestreckt.

Bei dieser Verfahrensweise müssen einige Nachteile akzeptiert werden, insbesondere ist dieses Verfahren sehr kostenintensiv. Ferner ist die Innenbeschichtung eines solchen Schlauches sehr kompliziert und aufwendig durchzuführen.

Ein weiterer wesentlicher Nachteil dieses Verfahrens ist der diskontinuierliche Produktionsablauf, bedingt durch die Ansammlung von Gasen und Flüssigkeiten im Inneren des Schlauches während der Regenerierungsstufe, die in gewissen Zeitabständen aus dem Schlauchinneren entfernt werden müssen. Hierzu wird der Schlauch aufgeschnitten und die Schnittstellen nach Durchlaufen des Naßteils entfernt. Die durch das Aufschneiden gebildeten Schlauchenden werden dann wieder miteinander verbunden, z. B. mit Viskose und anschließender Wärmeeinwirkung (DE-A-1 814 590), so daß in der abschließenden Trockenstufe wieder ein endloser Schlauch vorhanden ist. Eine weitere Ursache für die Diskontinuität ist das Einbringen von Beschichtungsflüssigkeit in das Schlauchinnere vor und nach der Trockenstufe, wobei der Schlauch in gleicher Weise zunächst aufgeschnitten und nach dem Füllen wieder vollständig abgedichtet wird.

Andererseits ist es auch bekannt (US-A-2 653 432) die überlappenden Ränder eines zu einem Schlauch gebogenen Films, der beispielsweise auch aus regenerierter Cellulose bestehen kann und gegebenenfalls eine Faserverstärkung aufweist, mit einem Streifen aus thermoplastischem Material, der zwischen den sich überlappenden Rändern angeordnet ist und der beim Erhitzen klebrig wird, miteinander zu verkleben. Als Beispiel für dieses thermoplastische Material wird u. a. Acrylsäureester und Polyvinylidenchlorid beschrieben. Diese bekannte Schlauchhülle kann auch einen feuchtigkeitsdichten Überzug auf der Außenseite aufweisen, wobei dann die überlappenden Ränder frei von dem Überzug und die restliche Oberfläche frei von thermoplastischem Material gehalten wird.

Bei diesem Verfahren soll sich der Klebstoff somit nicht direkt auf der Faserverstärkung, sondern auf der aus regenerierter Cellulose bestehenden Bahnoberfläche befinden und wird deshalb nicht zur Verklebung der überlappenden Randzonen der Faserverstärkung verwendet. Ferner ist die Festigkeit einer Überlappungsnaht gebildet durch Versiegeln der übereinanderliegenden Randzonen aus regenerierter Cellulose vergleichsweise gering und auch aus optischen Gründen völlig unbefriedigend.

Ausgehend von dem aufgezeigten Stand der Technik ist es deshalb Aufgabe der Erfindung, eine faserverstärkte Schlauchhülle aus regenerierter Cellulose vorzuschlagen, die die Nachteile der bekannten Schlauchhüllen nicht aufweist, die vielmehr optimale mechanische Eigenschaften besitzt. Die Schlauchhülle und insbesondere die Verklebungsnaht der Faserverstärkung muß relativ hohen mechanischen und thermischen Belastungen, z. B. Dehnungsbelastungen und der Einwirkung von heißem Wasser, standhalten und den Geschmack und das Aussehen des umhüllten Lebensmittels nicht beeinträchtigen.

Eine weitere Aufgabe der Erfindung besteht darin, eine gerade, im wesentlichen krümmungsfreie und faltenfreie Hülle mit einer Naht in der Faserverstärkung zu schaffen, die auch unter Einwirkung von Wasser und beim Schrumpfen ihre krümmungsfreie und faltenfreie Form auch im Nahtbereich beibehält, trotz der relativ großen Hüllendicke in diesem Bereich. Schließlich ist es auch Aufgabe der Erfindung, eine Hülle zu finden, die sich in einem kontinuierlichen Prozeß herstellen und auf ihrer Innenseite beschichten läßt.

Diese Aufgabe wird überraschenderweise gelöst mit der im Anspruch 1 genannten Schlauchhülle. Die Ansprüche 2 bis 9 geben weitere Ausführungsformen der Schlauchhülle an. Die Aufgabe wird ferner gelöst durch ein Verfahren zur Herstellung der Schlauchhülle mit den im Anspruch 10 genannten Merkmalen. Die Ansprüche 11 und 12 beschreiben weitere Ausbildungen des Verfahrens.

Diese Hülle nach der Erfindung zeigt den Vorteil, daß sie einerseits nach einem kontinuierlichen Verfahren hergestellt werden kann und andererseits aber auch bei Einwirkung von Wärme und Wasser, wie dies beispielsweise beim Brühen und anschließendem Abkühlen von Wursthüllen geschieht, ihre gerade, krümmungsfreie Form beibehält und ausreichende Nahtfestigkeit zeigt. Dies ist besonders überraschend und nicht vorhersehbar, denn es ist an sich zu erwarten, daß sich die Hülle bei Einwirkung von Wärme und Wasser aufgrund der verschiedenen Wandstärken im Nahtbereich des Faserschlauchs einerseits und im übrigen Bereich andererseits und der daraus zu erwartenden unterschiedlichen Werte für die Festigkeit, für das Wasseraufnahme- und für das Wasserrückhaltevermögen krümmt oder ungleichmäßig ausdehnt oder schrumpft und sogar zum Platzen neigt.

Die Faserverstärkung ist ein blatt- oder bahnförmiger rechteckiger Zuschnitt, insbesondere ist sie bahnförmig, z. B. in Form einer Papierbahn, und besteht gewöhnlich aus Fasern wie sie bei der Herstellung von Papier oder Reispapier verwendet werden, oder aus nativen Fasern wie Hanf- oder Flachsfasern, oder synthetischen Fasern, wie Polyamid-, Polyester- oder Polyacrylnitril-Fasern. Die bahnförmige Faserverstärkung ist z. B. ein textiles Gebilde wie ein adhäsiv, mechanisch oder thermisch verfestigter Faservliesstoff aus wirr oder geordnet abgelegten Spinnfasern, Filamenten oder multiplen Filamentgarnen aus nativem oder synthetischem Material, ein Gewebe, Netzwerk, Gitter, Gewirke oder dergleichen. Vorzugsweise ist die Faserbahn ein Papierfaservliesstoff, insbesondere mit einem Flächengewicht von 17 bis 27 g/m². Der Einfachheit halber wird im folgenden anstelle von »blatt- oder bahnförmigen Zuschnitten« und »endlosen Bahnen« nur von Bahnen oder Faserbahnen gesprochen.

Als Klebstoff wird ein Stoffsystem auf Basis eines thermoplastischen Kunststoffs verwendet, das in der Hitze ohne chemische Reaktion abbindet. Hierzu zählen auch Schmelzklebstoffe, die lösungsmittelfrei sind, ebenso wie Heißsiegelklebstoffe, deren Lösungsmittel man allerdings bereits vor der Klebung entweichen läßt. Eine wesentliche Voraussetzung ist, daß dieses Stoffsystem physiologisch unbedenklich ist. Der Einfachheit halber wird im folgenden anstelle von Klebstoff enthaltender »Schicht und/oder Imprägnierung« nur von »Schicht« oder »Klebstoffschicht« gesprochen.

Die Klebstoff enthaltende Schicht wird entweder direkt in Form einer Emulsion, Dispersion oder Lösung, z. B. in Wasser, Benzin, Siedebereich 65 bis 95°C, Aceton, Essigester, Toluol, chlorierten Kohlenwasserstoffen oder in Lösungsmittelgemischen, z. B. Aceton/Benzin, oder in Schmelze mit üblichen Extrusionsvorrichtungen vollflächig auf die eine der beiden Oberflächen der Faserbahn aufgebracht. Die Klebstoffschicht ist in einer Menge von kleiner als 50 g/m², vorzugsweise 5 bis 50, insbesondere 5 bis 20 g/m² auf der Faserbahnoberfläche vorhanden, so daß die Faserbahn nicht vollständig von dem Klebstoff durchdrungen wird. Die gegenüberliegende Oberfläche der Faserbahn ist somit noch voll saugfähig.

Nach dem Auftragen wird das eventuell verwendete Dispergier- bzw. Lösungsmittel entfernt, z. B. durch Erhitzen mit Heißluft.

Schmelzklebstoffe, auch »Hot-melt-Klebstoffe« genannt, sind nicht härtende, schmelzbare thermoplastische Harze, die bei Raumtemperatur fest sind und die beim Verklebungsvorgang vorübergehend geschmolzen werden, wobei sie keine chemische Veränderung erleiden. Nach dem Erkalten und Erstarren haften sie fest an der Faserbahnoberfläche. Als Polymerrohstoff dienen in erster Linie Äthylen-Vinylacetat-Copolymere, insbesondere mit einem Vinylacetat-Gehalt von 18 bis 40 Gew.-%, vorzugsweise etwa 30%, und einem Schmelzindex von 4 bis 500, insbesondere 40 bis 400. Auch niedermolekulare Polyäthylene, ataktische Polypropylene, Äthylen-Acrylester-Copolymere, carboxylgruppenhaltige Copolymere, Styrol-Butadien- und Styrol-Isopren-Blockcopolymere, schmelzbare aliphatische oder aromatische Polyester, z. B. schwach verzweigt und hydroxylgruppenhaltig, Polyurethane, Polyamidharze, insbesondere mit relativ niedrigem Schmelzpunkt und Schmelzviskosität, sowie Polyaminoamide sind als Basisharz für den Schmelzklebstoff geeignet. Neben diesen Harzen enthalten diese Klebstoffe gewöhnlich noch Harze, wie Balsamharze, Kolophoniumderivate, Kohlenwasserstoffharze, Wachse bzw. Paraffine, Oxidationsstabilisatoren, Weichmacher, Pigmente und/oder Füllstoffe.

Es werden Schmelzklebstoffe bevorzugt, die sich bei relativ niedriger Temperatur verarbeiten lassen, z. B. bei 140 bis 170°C. Sie müssen andererseits kochfest, hydrolysenunempfindlich und ausreichend flexibel sein.

Heißsiegelklebstoffe sind Klebstoffe, die — wie die Schmelzklebstoffe — bei der Verklebung thermisch aktiviert werden. Sie werden gewöhnlich in Form von Lösungen, Dispersionen oder Emulsionen in Wasser oder organischen Lösungsmitteln auf die Oberfläche der Faserbahn aufgebracht. Die abgebundene, lösungsmittelfreie Schicht soll nicht klebrig sein, sondern erst durch Wärmezufuhr während der Siegelung aufschmelzen und sich beim Abkühlen wieder verfestigen.

Als Rohstoff werden Copolymere des Vinylchlorids oder des Vinylidenchlorids in Lösung oder auch in Dispersion unter Zusatz von Harzen und anderen Polymeren benutzt. Daneben werden Copolymere des Vinylacetats sowie Polymethacrylsäureester, Polyurethane und Polyester, insbesondere Äthylen-Vinylacetat-Copolymere, Vinylacetat-Vinylchlorid-Copolymere, Polyamide und Polyäthylen, angewendet.

Für die Herstellung von Schläuchen mit im wesentlichen gasundurchlässiger Innenbeschichtung wird als siegelfähiges thermoplastisches Material insbesondere ein Vinylidenharz, das mit einem Flächengewicht von gewöhnlich 3 bis 12 g/m² vorhanden ist, eingesetzt. Hierzu gehören filmbildende Harze, die durch Mischpolymerisation von Monomeren erhalten werden, wobei wenigstens eine Komponente eine Vinylidengruppe enthält. Im allgemeinen können filmbildende Vinylidenharze verwendet werden, die im polymerisierten Molekül wenigstens 5 Gew.-%, vorzugsweise aber mindestens 80 Gew.-% Vinylidenchlorid enthalten. Als Comonomere seien genannt: Vinylderivate, wie Vinylchlorid, Alkylacrylate oder -methacrylate, Acrylnitril, Methacrylnitril, Styrol, ungesättigte organische Säuren, wie Itaconsäure, oder Mischungen von diesen Verbindungen. Das Copolymerisat kann neben Vinylidenchlorid eine bis drei dieser Monomeren enthalten.

Auch diese Klebstoffe können übliche Wachse, z. B. auf Basis von veresterten Montansäuren, Polyolefinwachse oder auf Basis von Oxazolin, und/oder übliche Füllstoffe, beispielsweise Kaolin, insbesondere hydrophobiertes Kaolin, Kieselsäure oder Calciumcarbonat (Kreide) mit einer bevorzugten mittleren Korngröße von 1 bis 3 $\mu$m enthalten.

Ferner werden übliche Zusätze an Weichmachern, z. B. Ester der Phthalsäure, wie Dibutylphthalat, Ester der Citronensäure, wie Acetyltributylcitrat, der Sebacinsäure oder Weinsäure, wie Diisobutyltartrat, verwendet.

Es ist aber auch möglich und unter Umständen aus verfahrenstechnischen Gründen zweckmäßiger, eine gasundurchlässige Schicht aus einem Vinylidenchlorid-Einheiten aufweisenden Copolymerisat nicht direkt auf die Faserbahn, sondern auf die Schmelzklebstoffschicht aufzubringen, wobei gegebenenfalls zur Verankerung der gasundurchlässigen Schicht auf der Schmelzklebstoffschicht eine haftvermittelnde Schicht verwendet wird.

Gegebenenfalls wird auch die Klebstoffschicht mit einer haftvermittelnden Schicht auf der Faserbahn verankert. Unter haftvermittelnder Schicht sind Stoffe oder Stoffgemische zu verstehen, die die Haftung zwischen Beschichtung und Substrat verbessern.

Die haftvermittelnde Schicht besteht aus einem im wesentlichen wasserunlöslichen Harz, vorzugsweise aus einem gehärteten kationischen hitzehärtbaren Harz, das im ungehärteten Zustand im wesentlichen wasserlöslich ist und durch Wärmeeinwirkung durch fortschreitende Kondensationsreaktion in wasserunlöslichen Zustand überführbar ist (US-A-3 378 379). Polyurethanharze, Nitrocellulose und andere, als wasserunlösliche Verankerungsmittel bekannte Polymere können ebenfalls eingesetzt werden. Die haftvermittelnde Schicht wird vorzugsweise über die gesamte Bahnbreite auf die Faserbahn aufgebracht, und zwar direkt auf die Bahnoberfläche oder auf die Klebstoffschicht, falls eine gasundurchlässige Schicht verankert werden soll. Der Auftrag erfolgt bevorzugt in wäßriger Dispersion, die bis zu 25 Gew.-% des wärmehärtbaren Harzes enthält. Danach wird die überzogene Bahn auf 65 bis 125°C erhitzt, wodurch das Harz zu seiner wasserunlöslichen Form gehärtet wird und eine dauerhafte Bindung mit der Oberfläche der Faserbahn eingeht. Die Harzschicht hat ein Flächengewicht von etwa 30 bis 300 mg/m², vorzugsweise 40 bis 75 mg/m².

Als geeignete Lösungsmittel für das hitzehärtbare Harz werden niedrige aliphatische oder aromatische Kohlenwasserstoffe, niedrige Alkohole oder Ester oder Mischungen dieser Lösungsmittel eingesetzt. Vorteilhaft wird eine wäßrige Lösung oder Dispersion verwendet.

Falls für bestimmte Anwendungen gewünscht, wird zusammen mit dem hitzehärtbaren Harz ein zusätzliches wasserabstoßendes Harz wie Paraffin, Montanwachs, Carnaubawachs und/oder geeignete Verdickungsmittel, wie Celluloseäther oder Stärke, auf die Faserbahn aufgetragen.

Die Faserbahn kann auch vor oder nach Aufbringen des hitzehärtbaren Harzes oder der Klebstoffschicht und vor dem Verkleben zu einem Faserschlauch mit Beschriftungen oder dekorativen Mustern bedruckt werden.

Der Überzug aus hitzehärtbarem Harz kann gegebenenfalls Pigmente und/oder organische Farben enthalten oder bildet eine klare Schicht, durch die eine eventuelle Bedruckung oder Färbung der Faserbahn gut sichtbar bleibt. Ein transparenter organischer Farbstoff kann aber auch zusammen mit dem Harz auf die Faserbahn aufgebracht werden, um der Verpackungshülle eine entsprechende Farbe zu verleihen.

Die Beschichtung aus dem hitzehärtbaren Harz enthält gegebenenfalls einen Weichmacher für das hitzehärtbare Harz und/oder ein Härtungsmittel für das hitzehärtbare Harz. Das hitzehärtbare Harz und der Weichmacher werden in einem geeigneten flüssigen Lösungs- bzw. Dispergiermittel aufgenommen, das vorteilhafterweise bei einer Temperatur verdampft werden kann, bei der gleichzeitig zumindest eine Vorhärtung des Harzes eintreten kann.

Als Beispiele für das hitzehärtbare Harz sind zu nennen: Harnstoff-Formaldehyd- (US-A-2 616 874), Melamin-Formaldehyd- (US-A-2 796 362, US-A-2 345 543) und Phenol-Formaldehyd-Harze. Als bevorzugter Weichmacher für diese hitzehärtbaren Harze dienen weiche, nichthärtbare Harze vom Alkyd-Typ oder auch Dibutylphthalat, Trikresylphosphate oder Dibutylsebacat.

Als Härter für das hitzehärtbare Harz kann beispielsweise Ammoniumthiocyanat, Toluolsulfonsäure, Maleinsäure oder Milchsäure eingesetzt werden. Diese Verbindungen verhalten sich wie Katalysatoren bei der Härtung der hitzehärtbaren Harze.

Weitere Beispiele für hitzehärtbare Harze sind Kondensationsprodukte von Polyamidpolyaminen oder aliphatischen Polyaminen oder von Polyamiden mit bifunktionellen Halohydrinen oder deren Derivaten wie z. B. Epichlorhydrin, wie sie beispielsweise in den US-A-2 573 956 und US-A-2 926 154 oder in den GB-A-865 727 und GB-A-908 205 beschrieben sind. Ein besonders geeignetes Harz ist beispielsweise das Reaktionsprodukt aus aliphatischem 2,6-Polyamid, Diäthylentriamin und Epichlorhydrin.

Als Polyamine kommen einfache Alkylendiamine in Betracht oder Polyalkylenpolyamine wie beispielsweise Diäthylentriamin, Triäthylentetramin, Tetraäthylenpentamin und die entsprechenden Polypropylenpolyamine, und Polybutylenpolyamine wie Dibutylentriamin. Die Polyamine werden zur Herstellung der entsprechenden Chlorhydrinharze mit mehr als einem Mol Epichlorhydrin je Mol Polyamin umgesetzt. Die Polyamid-Polyamine sind Kondensationsprodukte einer gesättigten, aliphatischen, zweibasischen Säure mit einem der oben genannten Polyamine. Vorzugsweise werden Diglykolsäure, Bernsteinsäure, Glutarsäure und Adipinsäure als zweibasische Säure verwendet.

Die mit dem Klebstoff versehene Faserbahn wird zur Schlauchherstellung entsprechend gebogen, wobei sich die längsaxial sich erstreckenden Randbereiche überlappen. Die mit Klebstoff versehene Oberfläche der Faserbahn bildet die innere Oberfläche des Schlauchs. Die Formung der Faserbahn zu einem Schlauch erfolgt beispielsweise entweder auf einer genügend langen Wegstrecke, so daß keine Verzerrung und Faltenbildung erfolgt, oder durch Umlenkung über ein schulterartiges Formwerkzeug.

Die überlappenden Randzonen der Faserbahn werden miteinander in der Hitze verklebt, wobei die eine Randzone der Faserbahn gegen die Klebstoffschicht auf der anderen Randzone gedrückt wird.

Die Verklebung erfolgt z. B. durch Anpressen einer auf eine bestimmte Temperatur vorgeheizten Backe oder Rolle. Für die Verklebung kann jedoch jede andere Wärmequelle in Frage kommen, wie beispielsweise bandförmige IR-Strahler, Hochfrequenz-Erwärmung oder Heißluft. Der erforderliche Anpreßdruck kann auch mit einem Luftstrom oder durch Vakuum erfolgen. Die angewandten Temperaturen und Drucke hängen weitgehend von den Stoffeigenschaften der Klebstoffschichten ab. Bahnbewegung und Verklebung kann taktweise oder kontinuierlich erfolgen.

Der erhaltene Faserschlauch wird nun auf seiner äußeren Oberfläche mit einer Viskoselösung behandelt, z. B. in eine Viskoselösung getaucht oder mit einer Viskoselösung beschichtet, z. B. mit schlitzförmigen Düsen, Walzen oder durch Sprühvorrichtungen, und anschließend durch Einführen in Spinnbäder oder durch Ansprühen oder Antragen eines Films aus Regenerierflüssigkeit (DE-A-2 829 102) auf seine äußere Oberfläche in regenerierte Cellulose übergeführt.

Die Viskoselösung ist eine alkalische Lösung von Natrium-Cellulosexanthogenat und wird üblicherweise hergestellt durch Umsetzung der aus Cellulose mit Natriumhydroxidlösung erhaltenen Alkalicellulose mit Schwefelkohlenstoff im alkalischen Medium; sie enthält meist noch 4 bis 20 Gew.-% Cellulose. Nach der Reifung wird die Viskose auf den Faserschlauch aufgebracht und versponnen, d. h. koaguliert. Das Spinnbad enthält beispielsweise Schwefelsäure, ferner Natriumsulfat und/oder Ammoniumsulfat.

Nach der Koagulation wird in weiteren Stufen das aus Viskose-Gel bestehende faserverstärkte bahnförmige Produkt in saurem Medium, z. B. in verdünnter (kleiner/gleich 5 Gew.-%) Schwefelsäure, zu Cellulosehydrat-Gel regeneriert, zur Entfernung von Säure und Salzen mit Wasser gewaschen, mit z. B. Natriumsulfitlösung entschwefelt, gegebenenfalls durch ein Bleichbad und schließlich durch ein übliches Weichmacherbad mit z. B. 5- bis 20prozentiger Glycerinlösung geführt.

Das Cellulosehydrat-Gel auf der äußeren Oberfläche des Faserschlauches wird durch intensive Trocknung bei 90 bis 140°C in regenerierte Cellulose übergeführt und gegebenenfalls durch Wiederanfeuchten auf einen Wassergehalt von etwa 5 bis 15 Gew.-% eingestellt. Der faserverstärkte Cellulosehydratschlauch zeigt nach der Trocknung eine Dicke von 50 bis 200 µm entsprechend einem Flächengewicht von 50 bis 250 g/m².

Zur Verpackung von Fleischwaren in Form von Wurstmasse werden bekanntlich geraffte, nahtlose Schlauchhüllen verwendet, die beim Einpressen der Wurstmasse fortlaufend entfältelt werden. Diese gerafften Hüllen, in der Fachsprache auch als Raupen oder Hohlstäbe bezeichnet, werden bisher aus langen, nahtlosen Schläuchen hergestellt, die man in Richtung ihrer Längsachse fördert und gegen eine Gegenkraft rafft, wobei die Länge der gerafften Hülle gewöhnlich nur noch 1 bis 3% der Ursprungslänge beträgt.

Auch die erfindungsgemäße Schlauchhülle kann gerafft werden.

Dies ist besonders überraschend, da wegen der Verdickung im Bereich der Versiegelung der sich überlappenden Ränder eigentlich Schwierigkeiten beim Raffen zu erwarten sind. Die Schlauchhülle wird beispielsweise mit dem aus den US-A-3 988 804 und US-A-4 185 358 bekannten Verfahren bzw. der dort beschriebenen Vorrichtung gerafft.

Ein Raffverhältnis von 1 : 70 bis 1 : 80 läßt sich ohne weiteres erreichen.

Es ist auch eine spiralförmige Verdrehung der Hülle und folglich eine Verdrillung der relativ dikken Nahtzone um die Längsachse der Hülle beim Raffvorgang möglich, aber nicht erforderlich. Dies geschieht beispielsweise mit an sich bekannten Raffvorrichtungen, wie sie z. B. in US-A-2 819 488, US-A-3 619 854, US-A-3 594 857 und US-A-3 766 603 beschrieben sind. Die Anzahl der Windungen pro 10 m Schlauchlänge liegt zweckmäßigerweise zwischen 0,5 und 10 und wird je nach Ausmaß der Verdickung in der Nahtzone gewählt.

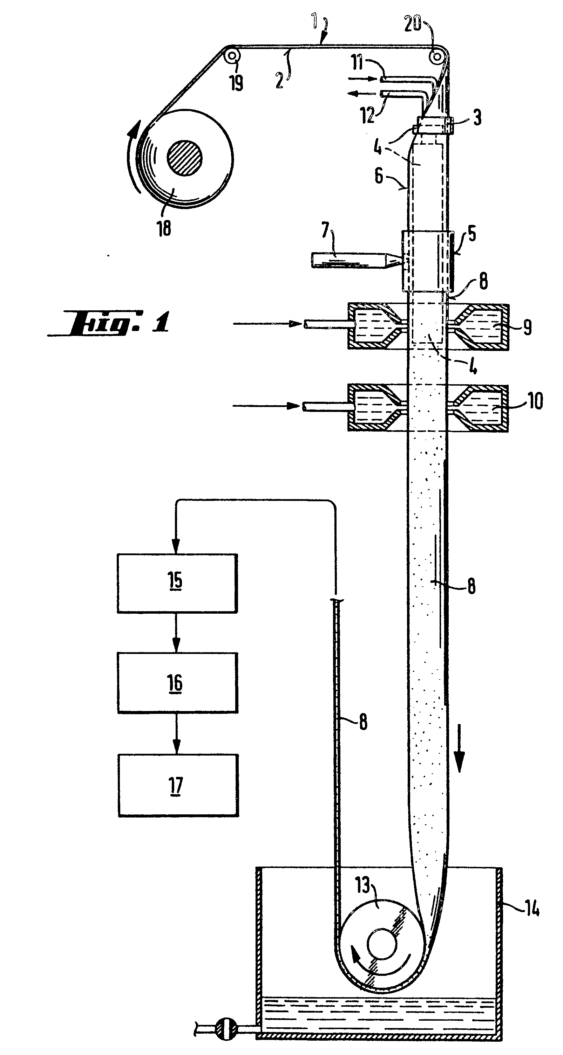

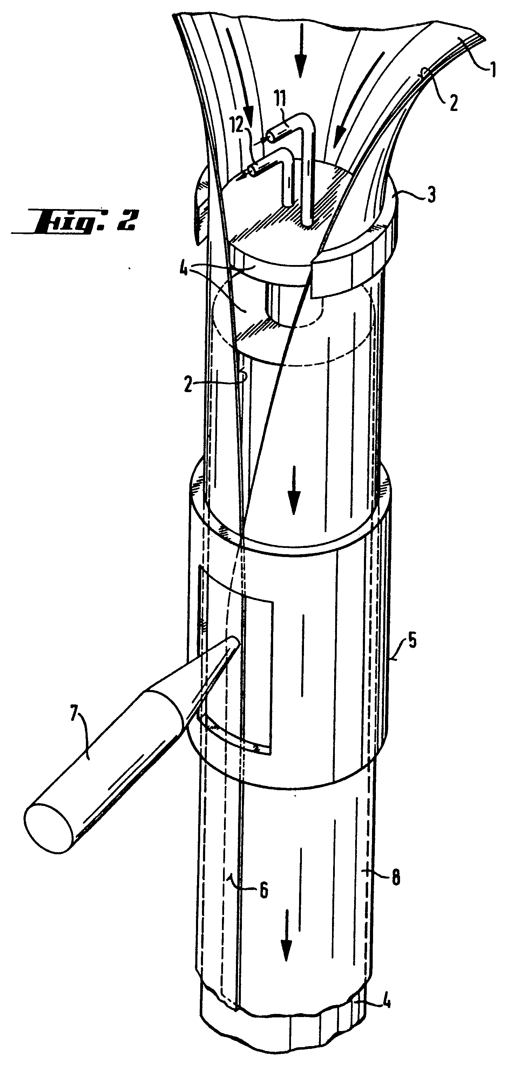

Die Erfindung wird anhand der Fig. 1 und 2 und den folgenden Beispielen näher erläutert.

Fig. 1 zeigt die Herstellung der schlauchförmigen Hülle.

Fig. 2 zeigt ausschnittsweise die Schlauchformung und das Bilden der Naht der Faserverstärkung.

## Beispiel 1

Ein bahnförmiger, langfaseriger Faservliesstoff 1 aus Hanfpapier mit einer Flachbreite von 204 mm und einem Flächengewicht von 22 g/m², der auf der einen Oberfläche eine durch Extrusion (Extrusionstemperatur 290 bis 310°C) aufgebrachte Schicht 2 aus Hochdruckpolyäthylen

(Dichte 0,918 g/cm³, Schmelzindex 6–8, Schmelzpunkt 108°C) mit einem Flächengewicht von 25 g/m² aufweist, wird kontinuierlich von einer Rolle 18 abgezogen und unter Verwendung eines Ringsegments 3, eines Stützelements 4 und einer Führungshülse 5 zu einem Schlauch geformt. Der Schlauch zeigt einen Durchmesser von etwa 63 bis 64 mm, die Überlappungsbreite ist etwa 4 mm. Die mit Polyäthylen beschichtete Oberfläche befindet sich im Hohlraum des Schlauches und in der Überlappungsnaht 6. Die sich überlappenden Randzonen der Faserbahn 1 werden mit einem Ultraschallsiegelgerät 7 miteinander verschweißt.

Der erhaltene Faserschlauch 8 wird nun auf seiner Außenseite nach dem Stand der Technik mit einer Viskoselösung durch eine Ringschlitzdüse 9 beschichtet, wobei sich ein homogener geschlossener Viskosefilm ausbildet. Das zur Koagulation und Regeneration erforderliche Fällmittel, das Schwefelsäure, Ammoniumsulfat und Natriumsulfat in üblicher Konzentration enthält, wird nach der in der DE-A-2 829 102 gezeigten Anordnung mit einer kreisförmigen Ringschlitzdüse 10 in Form eines Films auf die viskosierte Außenoberfläche des Faserschlauchs 8 aufgebracht.

Während des Viskoseauftrags und der anschließenden Koagulations- und Regenerierungsstufe wird in den Faserschlauch durch die Leitung 11 Stützluft mit geringem Überdruck eingeleitet, die das Schrumpfen und die Faltenbildung des Schlauchs 8 verhindert. Mit 12 ist der Stützluftauslaß bezeichnet. Nach Umlenken des Schlauchs mit der Rolle 13, die sich in der zur Aufnahme vom ablaufenden Fällmittel vorgesehenen Wanne 14 befindet, durchläuft der Schlauch übliche Waschbäder 15, Weichmacherbäder 16 und eine Trockenvorrichtung 17. Mit 19 und 20 sind weitere Rollen bezeichnet, die zum Umlenken der Faserbahn dienen.

Die erhaltene faserverstärkte Hülle aus regenerierter Cellulose hat eine Wasserdampfdurchlässigkeit von 10 g/m² · d (nach DIN 53 122), die Werte für die Reißfestigkeit und Reißdehnung können der folgenden Tabelle entnommen werden:

|  | Reißkraft (N/15 mm) | Reißdehnung (%) |
|---|---|---|
| nasser Probekörper in |  |  |
| Längsrichtung | 43 | 14 |
| Querrichtung | 37 | 22 |
| trockener Probekörper in |  |  |
| Längsrichtung | 75 | 7 |
| Querrichtung | 61 | 12 |

Der fertige, nasse Schlauch zeigt einen Platzdruck von 0,9 bar.

Die Messung der Reißfestigkeit und der Reißdehnung erfolgt mit einer elektronischen Spanneinrichtung nach DIN 53 455. Unter Reißfestigkeit ist die Widerstandsfähigkeit des Probekörpers gegenüber der Zugbeanspruchung im Augenblick des Reißens zu verstehen. Sie wird gemessen als Reißkraft (N), bezogen auf den Querschnitt (mm²). Die Reißdehnung ist die prozentuale Verlängerung des Probekörpers gegenüber der Ausgangslänge bei Belastung im Augenblick des Reißens und wird in Prozent angegeben. Der Probekörper hat eine Länge von 100 mm, Breite von 15 mm und Dicke von 100 bis 110 µm.

Der nasse Probekörper wurde in Wasser von 40°C 30 Minuten lang gewässert, der trockene Probekörper enthält eine Restfeuchte von 8 bis 10 Gew.-% Wasser und 20 bis 24 Gew.-% Glycerin.

Beispiel 2

Der im Beispiel 1 verwendete bahnförmige Faservliesstoff mit extrusionsbeschichtetem Polyäthylenüberzug wird auf dieser Kunststoffschicht mit dem aus der DE-A-2 832 926 bekannten Vinylidenchlorid-Einheiten enthaltenden wasserdampf- und gasundurchlässigem Copolymerisat, gelöst in Tetrahydrofuran/Toluol (7 : 3), beschichtet. Die Lösung enthält ferner 1 bis 2 Gew.-% an Füllstoffen (hydrophobierte Kreide) und Wachsen (veresterte Montanwachse) sowie 5 bis 10 Gew.-% Weichmacher (Dibutylphthalat und Zitronensäureester). Die Dicke dieser Beschichtung entspricht einem Flächengewicht von 5 g/m². Zur Verbesserung der Haftung zwischen den Schichten aus Polyäthylen und dem gasundurchlässigen Copolymerisat wird auf die Polyäthylenschicht vor der Beschichtung mit dem Copolymerisat ein übliches haftvermittelndes Harz mit Rasterwalzen aufgebracht, z. B. ein Zweikomponentenkleber auf Polyurethanbasis oder ein Harzgemisch auf Basis von Polyester und Isocyanat.

Die Schlauchformung und Schlauchbildung sowie die Regenerierung erfolgt wie in Beispiel 1 beschrieben.

Der fertige Schlauch zeigt in nassem Zustand einen Platzdruck von 0,8 bar, eine Wasserdampfdurchlässigkeit von 1 bis 2 g/m² · d (DIN 53 122) und ein Flächengewicht von 105 g/m². Die Reißfestigkeit und Reißdehnung sind in der folgenden Tabelle aufgeführt.

|  | Reißkraft (N/15 mm) | Reiß-dehnung (%) |
|---|---|---|
| nasser Probekörper in |  |  |
| Längsrichtung | 55 | 12 |
| Querrichtung | 51 | 20 |
| trockener Probekörper in |  |  |
| Längsrichtung | 76 | 6 |
| Querrichtung | 63 | 11 |

Zum Vergleich werden die Werte für die Reißkraft und Reißdehnung einer üblichen faserverstärkten Schlauchhülle aus regenerierter Cellulose mit einer PVDC-Beschichtung auf der Innenseite angegeben. Die Schlauchhülle wird hergestellt durch Verkleben der zu einem Schlauch geformten Faserbahn mit Viskose, Beschichten mit regenerierter Cellulose und Aufbringen der PVDC-Schicht auf die Innenseite.

|  | Reißkraft (N/15 mm) | Reiß-dehnung (%) |
|---|---|---|
| nasser Probekörper in |  |  |
| Längsrichtung | 28 | 17 |
| Querrichtung | 23 | 17 |
| trockener Probekörper in |  |  |
| Längsrichtung | 72 | 6 |
| Querrichtung | 70 | 11 |

**Patentansprüche**

1. Aus faserverstärkter regenerierter Cellulose bestehende schlauchförmige Hülle für Lebensmittel, insbesondere Wursthülle, deren Faserverstärkung aus einem zu einem Schlauch gebogenen blatt- oder bahnförmigen Faserstoff besteht, wobei die längsaxial sich erstreckenden Randbereiche sich überlappen und miteinander verbunden sind, dadurch gekennzeichnet, daß die Faserverstärkung auf ihrer nach innen zugewandten Oberfläche eine unterbrechungsfreie über die gesamte Fläche der Faserverstärkung aufgebrachte Schicht und/oder Imprägnierung auf Basis thermoplastischen Kunststoffs mit einem Flächengewicht von kleiner als 50 g/m² aufweist, die gegebenenfalls mit einer haftvermittelnden Schicht auf den Fasern der Faserverstärkung verankert ist, und daß die Faserverstärkung auf ihrer äußeren Oberfläche eine aus Viskose hergestellte Schicht und/oder Imprägnierung aus regenerierter Cellulose zeigt, wobei die sich überlappenden Randbereiche der zu einem Schlauch gebogenen, ursprünglich blatt- oder bahnförmigen Faserverstärkung durch die Schicht und/oder Imprägnierung auf Basis thermoplastischen Kunststoffs miteinander verbunden sind.

2. Hülle nach Anspruch 1, dadurch gekennzeichnet, daß die Schicht und/oder Imprägnierung auf Basis thermoplastischen Kunststoffs einen Schmelzklebstoff oder heißsiegelfähiges Material enthält.

3. Hülle nach Anspruch 1 oder 2, dadurch gekennzeichnet, daß der thermoplastische Kunststoff ein Polymerisat oder Copolymerisat auf Basis von Äthylen und/oder Propylen oder Vinylidenchlorid ist.

4. Hülle nach einem der Ansprüche 1 bis 3, dadurch gekennzeichnet, daß der thermoplastische Kunststoff ein Polyamid ist oder enthält.

5. Hülle nach einem der Ansprüche 1 bis 4, dadurch gekennzeichnet, daß der thermoplastische Kunststoff mit einem Flächengewicht von 5 bis 50 g/m², insbesondere 5 bis 20 g/m², auf der Faserverstärkung vorhanden ist.

6. Hülle nach einem der Ansprüche 1 bis 5, dadurch gekennzeichnet, daß die bahn- oder blattförmige Faserverstärkung ein Papierfaservliesstoff mit einem Flächengewicht von 17 bis 27 g/m² ist.

7. Hülle nach einem der Ansprüche 1 bis 6, dadurch gekennzeichnet, daß die Schicht und/oder Imprägnierung auf Basis thermoplastischen Kunststoffs aus einem gasundurchlässigen Vinylidenchlorid-Einheiten aufweisenden Copolymerisat besteht.

8. Hülle nach einem der Ansprüche 1 bis 6, dadurch gekennzeichnet, daß sie auf ihrer Innenseite eine gasundurchlässige Schicht aus einem Vinylidenchlorid-Einheiten aufweisenden Copolymerisat aufweist, die, vorzugsweise mit einer haftvermittelnden Schicht, auf der Schicht und/oder Imprägnierung auf Basis thermoplastischen Kunststoffs verankert ist.

9. Hülle nach einem der Ansprüche 1 bis 8, dadurch gekennzeichnet, daß sie gerafft ist.

10. Verfahren zur Herstellung einer Hülle nach einem der vorhergehenden Ansprüche, wobei man einen bahn- oder blattförmigen Faserstoff zu einem Schlauch formt, die sich längsaxial erstreckenden Ränder des Faserstoffs überlappend miteinander verbindet, den gebildeten Faserschlauch auf seiner Außenseite mit einer Viskose enthaltenden Lösung beschichtet, die Viskose koaguliert und zu Cellulosehydrat-Gel regeneriert, durch Waschen von Säuren, Salzen und schwefelhaltigen Verbindungen befreit und trocknet, dadurch gekennzeichnet, daß man — gegebenenfalls nach vorherigem Auftrag einer haftvermittelnden Schicht — den bahn- oder blattförmigen Faserstoff zunächst auf seiner einen Seite vollflächig mit einem thermoplastischen Kunststoff mit einem Flächengewicht von kleiner als 50 g/m² versieht, den Faserstoff danach in der Weise zu einem Schlauch formt, daß die Schicht aus thermoplastischem Kunststoff sich auf der Innenseite des Schlauchs befindet, die sich überlappenden Ränder des Faserstoffs mit dem thermoplastischen Kunststoff durch Einwirkung von Wärme und unter Ausübung von Druck auf den Überlappungsbereich miteinander verbindet, auf der Außenseite des gebildeten Faserschlauchs eine Schicht aus Viskoselösung aufbringt, diese in regenerierte Cellulose überführt und die erhaltene schlauchförmige Hülle gegebenenfalls rafft.

11. Verfahren nach Anspruch 10, dadurch gekennzeichnet, daß man den bahn- oder blattförmigen Faserstoff auf der mit dem thermoplastischen Kunststoff beschichteten Oberfläche vor der Schlauchformung, gegebenenfalls nach vorherigem Auftrag einer haftvermittelnden Schicht, mit einer gasundurchlässigen Schicht versieht.

12. Verfahren nach Anspruch 10 oder 11, dadurch gekennzeichnet, daß man in den Schlauch während oder nach dem Verbinden der Ränder Füllgut, insbesondere Wurstbrät, einfüllt.

**Claims**

1. A tubular casing for foodstuffs, in particular sausages, which is composed of fiber-reinforced regenerated cellulose, the fiber-reinforcement of which comprises a sheet-like or web-like fiber material which is curved to give the shape of a tube, the edge regions which run parallel to the longitudinal axis overlapping and being bonded to one another, wherein the fiber reinforcement has, on its inward-facing surface, a layer and/or impregnation which is uninterrupted and applied across the entire area of the fiber reinforcement and which is based on a thermoplastic and has a weight per unit area of less than 50 g/m² and which, if appropriate, is anchored on the fibers of the fiber-reinforcement by means of an adhesion-promoting layer, and wherein the fiber reinforcement has, on its outer surface, a layer and/ or impregnation, prepared from viscose, of regenerated cellulose, and the overlapping edge regions of the fiber reinforcement, which originally was sheet-like or web-like and has been bent to give the shape of a tube, are bonded to one another by the layer and/or impregnation based on a thermoplastic.

2. A casing as claimed in claim 1, wherein the layer and/or impregnation based on a thermoplastic contains a hot-melt adhesive or a heat-sealable material.

3. A casing as claimed in claim 1 or 2, wherein the thermoplastic is a polymer or copolymer based on ethylene and/or propylene or vinylidene chloride.

4. A casing as claimed in any of claims 1 to 3, wherein the thermoplastic is, or contains, a polyamide.

5. A casing as claimed in any of claims 1 to 4, wherein the thermoplastic is present on the fiber reinforcement with a weight per unit area of 5 to 50 g/m², in particular 5 to 20 g/m².

6. A casing as claimed in any of claims 1 to 5, wherein the web-like or sheet-like fiber reinforcement is a paper fiber nonwoven having a weight per unit area of 17 to 27 g/m².

7. A casing as claimed in any of claims 1 to 6, wherein the layer and/or impregnation based on a thermoplastic is comprised of a gas-impermeable copolymer containing vinylidene chloride units.

8. A casing as claimed in any of claims 1 to 6, which has, on its inside, a gas-impermeable layer of a copolymer containing vinylidene chloride units, the layer preferably being anchored on the layer and/or impregnation based on a thermoplastic by means of an adhesion-promoting layer.

9. A casing as claimed in any of claims 1 to 7, which has been shirred.

10. A process for the manufacture of a casing as claimed in any of the preceding claims, in which a sheet-like or web-like fiber material is shaped to form a tube, the edges, running parallel to the longitudinal axis, of the fiber material are bonded to one another with an overlap, the fiber tube formed is coated on its outside with a solution containing viscose, the viscoase is coagulated and regenerated to cellulose hydrate gel, the latter is freed from acids, salts and sulfur-containing compounds by washing and the product is dried, wherein — if appropriate after previous application of an adhesion-promoting layer — the web-like or sheet-like fiber material is first provided on the whole area of one of its surfaces with a thermoplastic having a weight per unit area of less than 50 g/m², the fiber material is then shaped to form a tube, in such a way that the layer of thermoplastic is on the inside of the tube, the overlapping edges of the fiber material are bonded to one another by means of the thermoplastic under the action of heat and with application of pressure to the overlap zone, a layer of viscose solution is applied to the outside of the fiber tube formed and converted into regenerated cellulose and, if appropriate, the tubular casing obtained is shirred.

11. A process as claimed in claim 10, wherein the web-like or sheet-like fiber material is provided, on the surface coated with the thermoplastic, with a gas-impermeable layer before the tube is formed, if appropriate after previous application of an adhesion-promoting layer.

12. A process as claimed in claim 10 or 11, wherein the tube is filled, during or after the bonding of the edges, with a filling, in particular sausage meat.

## Revendications

1. Gaine tubulaire composée de cellulose régénérée renforcée par des fibres, pour denrées alimentaires, notamment peaux de saucisses dont le renforcement fibreux est constitué par une matière fibreuse en feuille ou bande recourbée en une gaine, les régions marginales s'étendant dans la direction axiale longitudinale se recouvrant et étant réunies l'une à l'autre, caractérisée en ce que le renforcement fibreux présente, sur sa surface dirigée vers l'intérieur, une couche ininterrompue, déposée sur toute la surface du renforcement fibreux et/ou une imprégnation à base de matière plastique thermoplastique possédant un poids par unité de surface inférieur à 50 g/m² qui est éventuellement ancrée sur les fibres du renforcement fibreux à l'aide d'une couche adhésive, et en ce que le renforcement fibreux présente sur sa surface externe une couche et/ou une imprégnation de cellulose régénérée fabriquée à partir de viscose, les régions marginales superposées du renforcement fibreux initialement en forme de feuille ou de bande et recourbé en une gaine, étant réunies entre elles par la couche et/ou l'imprégnation à base de matière synthétique thermoplastique.

2. Gaine selon la revendication 1, caractérisée en ce que la couche et/ou l'imprégnation à base de matière synthétique thermoplastique contient une colle fusible ou une matière pouvant être soudée à chaud.

3. Gaine selon la revendication 1 ou 2, caractérisée en ce que la matière synthétique thermoplastique est un polymérisat ou copolymérisat à base d'éthylène et/ou de propylène ou de chlorure de vinylidène.

4. Gaine selon l'une des revendications 1 à 3, caractérisée en ce que la matière synthétique thermoplastique est ou contient une polyamide.

5. Gaine selon l'une des revendications 1 à 4, caractérisée en ce que la matière synthétique thermoplastique est présente sur le renforcement fibreux en un poids par unité de surface de 5 à 50 g/m², et en particulier de 5 à 20 g/m².

6. Gaine selon l'une des revendications 1 à 5, caractérisée en ce que le renforcement fibreux en forme de bande ou de feuille est un voile de fibres de papier possédant un poids par unité de surface de 17 à 27 g/m².

7. Gaine selon l'une des revendications 1 à 6, caractérisée en ce que la couche et/ou l'imprégnation à base de matière synthétique thermoplastique sont constituées par un copolymérisat imperméable aux gaz qui contient des unités de chlorure de vinylidène.

8. Gaine selon l'une des revendications 1 à 6, caractérisée en ce qu'elle présente sur sa face interne une couche imperméable aux gaz faite d'un copolymérisat qui comprend des unités de chlorure de vinylidène et qui est ancrée sur la couche et/ou l'imprégnation à base de matière synthétique thermoplastique, de préférence à l'aide d'une couche adhésive.

9. Gaine selon l'une des revendications 1 à 8, caractérisée en ce qu'elle est plissée en accordéon.

10. Procédé de fabrication d'une gaine selon l'une des revendications précédentes, dans lequel on met une matière fibreuse en forme de bande ou de feuille à la forme d'une gaine, on assemble a recouvrement l'un à l'autre, les bords de la matière fibreuse qui s'étendent dans la direction longitudinale axiale; on enduit la gaine fibreuse formée sur sa face externe, d'une solution contenant de la viscose, on coagule la viscose et on la régénère pour former un gel d'hydrate de cellulose, on la débarrasse par lavage des acides, sels et composés soufrés et on la sèche, caractérisé en ce que — éventuellement après dépôt préalable d'une couche adhésive — on munit la matière fibreuse en forme de bande ou de feuille, sur toute la surface d'une de ses faces, d'une matière synthétique thermoplastique possédant un poids par unité de surface inférieur à 50 g/m², on met ensuite la matière fibreuse à la forme d'une gaine de façon que la couche de matière synthétique thermoplastique se trouve sur la face interne de la gaine, on assemble l'un à l'autre les bords superposés de la matière fibreuse portant la matière synthétique thermoplastique, en faisant agir la chaleur et en exerçant une pression sur la région de recouvrement, on dépose sur la face externe de la gaine fibreuse formée une couche de solution de viscose, on transforme cette solution en cellulose régénérée et on plisse éventuellement en accordéon la gaine souple ainsi obtenue.

11. Procédé selon la revendication 10, caractérisé en ce qu'on munit la matière fibreuse en forme de bande ou de feuille d'une couche imperméable aux gaz sur la surface enduite de la matière synthétique thermoplastique avant la mise en forme de gaine et, éventuellement, après dépôt préalable d'une couche adhésive.

12. Procédé selon la revendication 10 ou 11, caractérisé en ce que, pendant ou après l'assemblage des bords, on remplit la gaine de la matière de remplissage, notamment, de chair à saucisses.

0 060 926

Fig. 1

0 060 926

*Fig. 2*